# EUROPÄISCHE PATENTSCHRIFT

(11) **EP 1 487 658 B1**
(45) Veröffentlichungstag und Bekanntmachung des Hinweises auf die Patenterteilung: **21.03.2007**
(21) Anmeldenummer: 02774429.1
(22) Anmeldetag: 30.09.2002
(51) Int. Cl.: B60K 31/00, G01S 13/93

(54) **VERFAHREN ZUR WAHL DES BETRIEBSZUSTANDS EINES GESCHWINDIGKEITSREGELSYSTEMS FÜR KRAFTFAHRZEUGE**
METHOD FOR SELECTING THE OPERATING STATE OF A SPEED CONTROL SYSTEM FOR MOTOR VEHICLES
PROCEDE POUR SELECTIONNER L'ETAT DE FONCTIONNEMENT D'UN SYSTEME DE REGULATION DE VITESSE POUR AUTOMOBILES

(30) Priorität: 15.03.2002 DE 10211475
(43) Veröffentlichungstag der Anmeldung: 22.12.2004
(73) Patentinhaber: ROBERT BOSCH GMBH, 70442 Stuttgart (DE)
(72) Erfinder: LUEDER, Jens, 70806 Kornwestheim (DE); LEINEWEBER, Thilo, 70174 Stuttgart (DE); LAUXMANN, Ralph, 70825 Korntal-Muenchingen (DE); WINNER, Hermann, 76467 Bietigheim (DE); SCHNEIDER, Hans-Peter, 70469 Stuttgart (DE); WAGNER, Klaus-Peter, 71263 Weil Der Stadt (DE)
(86) Internationale Anmeldenummer: PCT/DE2002/003703
(87) Internationale Veröffentlichungsnummer: WO 2003/078195

(56) Entgegenhaltungen:
- EP-A- 1 074 853
- WO-A-01/22113
- DE-A- 19 614 061
- DE-A- 19 832 800

## Beschreibung

### STAND DER TECHNIK

Die Erfindung betrifft ein Verfahren zur Wahl des Betriebszustands bei einem Geschwindigkeitsregelsystem für Kraftfahrzeuge mit Abstandssensor und automatischer Blindheitserkennung sowie ein Geschwindigkeitsregelsystem zur Durchführung dieses Verfahrens.

Für Kraftfahrzeuge sind Geschwindigkeitsregelsysteme bekannt, mit denen die Geschwindigkeit des Fahrzeugs auf eine vom Fahrer gewählte Wunschgeschwindigkeit geregelt werden kann. Darüber hinaus kann mit Hilfe eines Abstandssensors, beispielsweise mit Hilfe eines Radar- oder Lidar-Sensors, der Abstand zu einem vorausfahrenden Fahrzeug gemessen werden. Die Geschwindigkeitsregelung wird dann so modifiziert, daß ein vorgegebener, vorzugsweise geschwindigkeitsabhängiger Abstand zu dem als Zielobjekt ausgewählten vorausfahrenden Fahrzeug eingehalten wird. Solche Systeme werden auch als adaptive Geschwindigkeitsregelsysteme oder ACC-Systeme (Adaptive Cruise Control) bezeichnet.

Die einwandfreie Funktion eines ACC-Systems setzt voraus, daß der Abstandssensor fehlerfrei arbeitet und korrekt justiert ist, so daß auf der eigenen Fahrspur vorausfahrende Fahrzeuge zuverlässig geortet werden können. Neben einer Funktionsstörung oder Fehljustierung des Abstandssensors können auch Umweltfaktoren wie etwa starker Regen oder Schneefall, Verschmutzung des Sensorkopfes und dergleichen Reduktion der Sensorreichweite bis hin zu einer Erblindung des Abstandssensors führen. Generell wird die Funktion von Radarsensoren durch Regen oder Schneefall weniger beeinträchtigt als die von Lidarsensoren, doch besteht auch bei Radarsensoren vor allem dann die Gefahr einer Erblindung, wenn die in exponierter Lage an der Front des Fahrzeugs angebrachte Radarantenne mit Schnee, Eis oder von der Straße aufgewirbeltem Matsch verkrustet ist. Aus Sicherheitsgründen ist es erwünscht, daß die Blindheit des Abstandssensors automatisch erkannt wird und daraufhin eine Abschaltung des ACC-Systems ausgelöst und ein akustischer oder optischer Warnhinweis an den Fahrer ausgegeben wird.

Aus DE 196 44 164 A1 ist ein Kraftfahrzeugradarsystem bekannt, bei dem ein zur Fokussierung der Radarwellen dienender dielektrischer Körper mit elektrischen Leiterbahnen überzogen ist, die es gestatten, einen den Radarempfang störenden Belag aus Schmutz, Schnee oder Feuchtigkeit zu detektieren. Gegebenenfalls kann der störende Belag auch automatisch, beispielsweise durch elektrische Beheizung oder durch eine Art Scheibenwischer entfernt werden. Solche Überwachungs- und Reinigungssysteme sind jedoch relativ aufwendig und teuer.

In DE 199 45 268 A1 wird ein Verfahren beschrieben, das es gestattet, die Blindheit des Radarsensors allein anhand der vom Radarsensor selbst gelieferten Signale zu erkennen. Durch Auswertung dieser Signale werden verschiedene Indikatoren gebildet, die je nach Verkehrssituation mit mehr oder minder großer Aussagekraft auf eine Erblindung des Sensors hinweisen. Beispiele für geeignete Indikatoren sind die Winkelgüte aller vom Radarsystem detektierten Objekte, die Objektstabilität, d. h., die Rate von Detektionsausfällen des für die Regelung ausgewählten Zielobjekts beschreibt, die mittlere Leistung der vom Sensor empfangenden Signale, die Summe aller vom System während einer Messung detektierten Objekte, die Beziehung zwischen Objektabstand und Radar-Amplitude bei dem am weitesten vom eigenen Fahrzeug entfernten detektierten Objekt sowie das Vorhandensein oder Nichtvorhandensein von Straßenreflexionen. Diese Indikatoren werden mit Gewichtsfaktoren gewichtet, die ihrerseits in Abhängigkeit von der Verkehrssituation variabel sein können, und durch Vergleich der so erhaltenen gewichteten Summe der Indikatoren mit einem Schwellenwert wird ein Entscheidungssignal gewonnen, das anzeigt, ob der Sensor blind ist oder nicht.

Aus der WO 01/22113 (oberbegriff von Anspruch 1) ist ein Verfahren und eine Vorrichtung zur Zustandserkennung bei einem System zur automatischen Längs- und/oder Querregelung bei einem Kraftfahrzeug bekannt, das nach dem Radarprinzip und/oder dem Lidarprinzip arbeitet und insbesondere zur Verschmutzungs- und/oder Blindheitserkennung eines Sensors vorgesehen ist. Dabei wird die Zustandserkennung von wenigstens zwei Indikatoren (In) abhängig gemacht, die aus den von dem Sensor empfangenen und/oder ausgesendeten Signalen gebildet werden, wobei die wenigstens zwei Indikatoren (In) mit Wichtungsfuktoren (an) gewichtet werden und wobei die gewichteten Indikatoren zu einer einzigen Wahrscheinlichkeit (V) verknüpft werden, die eine Aussage über den wahrscheinlichen Zustand (P) des Systems macht.

Hinsichtlich der Verkehrssituationen ist für die Blindheitserkennung vor allem die Unterscheidung zwischen Folgefahrt und Freifahrt relevant. Mit Folgefahrt wird die Verkehrssituation bezeichnet, in der ein unmittelbar vorausfahrendes Fahrzeug als Zielobjekt ausgewählt ist und in angemessenem Abstand verfolgt wird. In dieser Situation ist der plötzliche Verlust des Zielobjekts ein wichtiger Blindheitsindikator. Freifahrt bezeichnet die Verkehrssituation, in der kein relevantes Zielobjekt ausgewählt ist, sondern auf die vom Fahrer gewählte Wunschgeschwindigkeit geregelt wird. Auch in dieser Situation wird der Sensor jedoch im allgemeinen andere Radarziele erfassen, beispielsweise Straßenreflexionen, bewegliche Ziele oder Standziele am Fahrbahnrand, Fahrzeuge auf Nebenspuren und dergleichen. Die Radar-Echos dieser Ziele können dann für die Blindheitserkennung herangezogen werden.

Wenn bei dem bekannten System die Blindheit des Sensors erkannt worden ist, sei es in Freifahrt oder in Folgefahrt, so führt dies unmittelbar zu einer Abschaltung des ACC-Systems, und der Fahrer wird durch eine Übernahmeaufforderung dazu veranlaßt, selbst mit Hilfe von Gaspedal und Bremse die Kontrolle über die Längsbewegungen des Fahrzeugs zu übernehmen.

### AUFGABE, LÖSUNG UND VORTEILE DER ERFINDUNG

Aufgabe der Erfindung ist es, die automatische Auswahl des Betriebszustands des Geschwindigkeitsregelsystems, insbesondere die Wahl zwischen dem aktiven und dem inaktiven Zustand des ACC-Systems, so zu verbessern, daß unter angemessener Berücksichtigung des Ergebnisses der Blindheitserkennung eine hohe Verfügbarkeit des ACC-Systems und eine für den Fahrer plausible Systemreaktion in einer großen Bandbreite von Betriebssituationen erreicht wird.

Diese Aufgabe wird erfindungsgemäß bei einem Verfahren der Eingangs genannten Art dadurch gelöst, daß für die automatische Abschaltung der Geschwindigkeitsregelung bei Blindheit des Abstandssensors mindestens eine weitere Bedingung überprüft wird und die Abschaltung nur dann vorgenommen wird, wenn auch diese weitere Bedingung erfüllt ist.

Die Erfindung geht von der Überlegung aus, daß die automatische Blindheitserkennung in bestimmten Betriebssituationen nur eine begrenzte Verläßlichkeit hat, so daß es zu ungerechtfertigten und für den Fahrer unplausiblen Abschaltungen des ACC-Systems kommen kann, durch die der Komfort und das Sicherheitsgefühl des Fahrers beeinträchtigt werden können. Beispielsweise kann es bei Freifahrten in dünn besiedelten Gegenden, etwa in Wüsten, vorkommen, daß durch das Fehlen von reflektierenden Radarzielen eine Blindheit des Radarsensors vorgetäuscht wird, so daß eine ungerechtfertigte Abschaltung des ACC-Systems ausgelöst wird. Der Fahrer muß dann, aus seiner Sicht ohne erkennbaren Grund, selbst in das Fahrgeschehen eingreifen, was häufig als Beeinträchtigung des Komforts empfunden wird und auch das Vertrauen in die Zuverlässigkeit des ACC-Systems schmälert. Erfindungsgemäß wird deshalb bei einer erkannten (echten oder vermeintlichen) Blindheit des Abstandssensors geprüft, ob mindestens noch eine weitere Bedingung vorliegt, die die Abschaltung des ACC-Systems als plausibel und geboten erscheinen läßt. Eine solche Bedingung wird insbesondere dann vorliegen, wenn sich das Fahrzeug zum Zeitpunkt der Blindheitserkennung in Folgefahrt befindet. In dieser Situation besteht eine hohe Wahrscheinlichkeit, daß die Blindheitserkennung auf eine echte Erblindung des Abstandssensors hinweist, und überdies ist es in dieser Situation aus Sicherheitsgründen sinnvoll, den Fahrer vorbeugend auf eine mögliche Fehlfunktion des ACC-Systems hinzuweisen. In Freifahrt besteht dagegen eine deutlich höhere Wahrscheinlichkeit, daß die Blindheit des Sensors nur durch einen Mangel an geeigneten Reflexionszielen vorgetäuscht wurde, und selbst wenn eine echte Erblindung vorliegen sollte, besteht keine unmittelbare Gefahr, wenn die Regelung auf die Wunschgeschwindigkeit fortgesetzt wird.

Allerdings können im Rahmen der Erfindung auch Bedingungen geprüft werden, die auch in Freifahrt eine Abschaltung der ACC-Funktion als sinnvoll erscheinen lassen. Zum Beispiel wäre es denkbar, bei erkannter Blindheit des Abstandssensors in Freifahrt zu überprüfen, ob innerhalb einer bestimmten Zeitspanne in der Vergangenheit eine Folgefahrt stattgefunden hat oder ein vorausfahrendes Fahrzeug überholt wurde. Dies würde daraufhin deuten, daß die befahrene Straße relativ belebt ist, so daß alsbald mit dem erneuten Auftauchen eines vorausfahrenden Fahrzeugs auf der eigenen Fahrspur zu rechnen ist und deshalb der Fahrer vorbeugend auf die vermutliche Erblindung des Abstandssensors hingewiesen werden sollte.

Da bei einem Radarsensor die Verschmutzung des Sensors durch Schnee, Matsch oder Eis die häufigste Ursache für die Erblindung ist, könnte ergänzend auch anhand des Einschaltzustands des Scheibenwischers, anhand eines Außentemperaturfühlers oder anhand des Antriebs- oder Bremsschlupfes überprüft werden, ob eine echte Erblindung des Radarsensors durch Eis, Schnee oder Matsch oder gegebenenfalls auch durch Regen plausibel ist.

Vorteilhafte Ausgestaltungen der Erfindung ergeben sich aus den Unteransprüchen.

In einer Ausführungsform der Erfindung wird als einzige Bedingung geprüft, ob sich das Fahrzeug in einer Folgefahrt befindet. In Freifahrt wird dagegen die ACC-Regelung auch im Fall einer Blindheitserkennung fortgesetzt. Gemäß einer weiteren Ausgestaltung der Erfindung ist es jedoch möglich, den Fahrer bei Blindheitserkennung in Freifahrt durch ein akustisches und/oder optisches Signal darauf hinzuweisen, daß möglicherweise eine Erblindung des Sensors vorliegt. Wenn ein solcher Hinweis nicht vorgesehen ist, braucht natürlich in Freifahrt erst gar keine Blindheitsprüfung durchgeführt zu werden.

Wenn in Folgefahrt oder aufgrund anderer Zusatzbedingungen die ACC-Funktion abgeschaltet wurde, so führt dies in der Regel zu einer für den Fahrer deutlich spürbaren Fahrzeugverzögerung, anhand derer der Fahrer das Abschalten der ACC-Regelung erkennen kann. Es ist jedoch zweckmäßig, den Fahrer zusätzlich durch ein Signal (Übernahmeaufforderung) auf die Abschaltung hinzuweisen. Wenn nach erfolgter Abschaltung wieder ein Zielobjekt erkannt wird, kann die ACC-Regelung automatisch wieder aufgenommen werden, da dann offenbar die Erblindung des Abstandssensors beseitigt ist oder keine echte Erblindung vorgelegen hat. In einer alternativen Ausführungsform kann das System jedoch so ausgelegt sein, daß die ACC-Regelung nur durch einen Fahrerbefehl wieder aktiviert werden kann.

Bei Blindheitserkennung in Freifahrt ist es in einer modifizierten Ausführungsform möglich, die Geschwindigkeitsregelung auf die Wunschgeschwindigkeit fortzusetzen, aber die Abstandsüberwachung zu inaktivieren und den Fahrer durch ein Signal auf diesen Umstand hinzuweisen. Auch in diesem Fall kann die Reaktivierung der Abstandsüberwachung entweder automatisch bei Erfassung eines neuen Zielobjektes oder nur auf ausdrücklichen Fahrerbefehl erfolgen.

Gemäß einer anderen Ausführungsform der Erfindung wird anstelle der Bedingung "Folgefahrt" geprüft, ob es sich bei der aktuellen Blindheitserkennung um die erste Blindheitserkennung seit Fahrtantritt oder innerhalb einer bestimmten Zeitspanne handelt. Eine erstmalige Blindheitserkennung wird dann sowohl in Folgefahrt als auch in Freifahrt zu einer Abschaltung des ACC-Systems führen. Wenn der Fahrer erkennt, daß er sich in einer sehr reflexionsarmen Umgebung befindet und deshalb eine unechte Blindheitserkennung wahrscheinlich ist, wird er die ACC-Regelung durch einen entsprechenden Befehl wieder aktivieren. Wenn dann das Blindheitserkennungssystem erneut die Erblindung des Sensors anzeigt, hat das übergeordnete Steuersystem "gelernt", daß die automatische Abschaltung nicht dem Fahrerwunsch entspricht, und die ACC-Funktion wird zumindest für eine begrenzte Zeitspanne aufrecht erhalten. Die Länge dieser Zeitspanne kann variabel sein und wird um so länger gewählt werden, je häufiger der Fahrer das System reaktiviert hat. Als Alternative kann dem Fahrer die Möglichkeit gegeben werden, direkt einen Befehl "Blindheitserkennung ignorieren" einzugeben, der dann bis zum Ende der Fahrt oder bis zum Widerruf durch den Fahrer gültig bleibt. Die zu überprüfende Zusatzbedingung besteht in diesem Fall darin, daß der Befehl "Blindheitserkennung ignorieren" nicht aktiv ist. Aus Sicherheitsgründen sollte dann bei Fahrtantritt, also bei Einschalten der Zündung, eine Initialisierung erfolgen, die den Befehl "Blindheitserkennung ignorieren" inaktiv macht.

### KURZBESCHREIBUNG DER ZEICHNUNGEN

Im folgenden werden Ausführungsbeispiele der Erfindung anhand der Zeichnungen näher erläutert.

Es zeigen:
- Figur 1: eine schematische Darstellung der wesentlichen Komponenten eines ACC-Systems in einem Kraftfahrzeug; und
- Figuren 2 bis 4: Flußdiagramme für verschiedene Ausführungsformen des Verfahrens.

### BESCHREIBUNG VON AUFÜHRUNGSBEISPIELEN

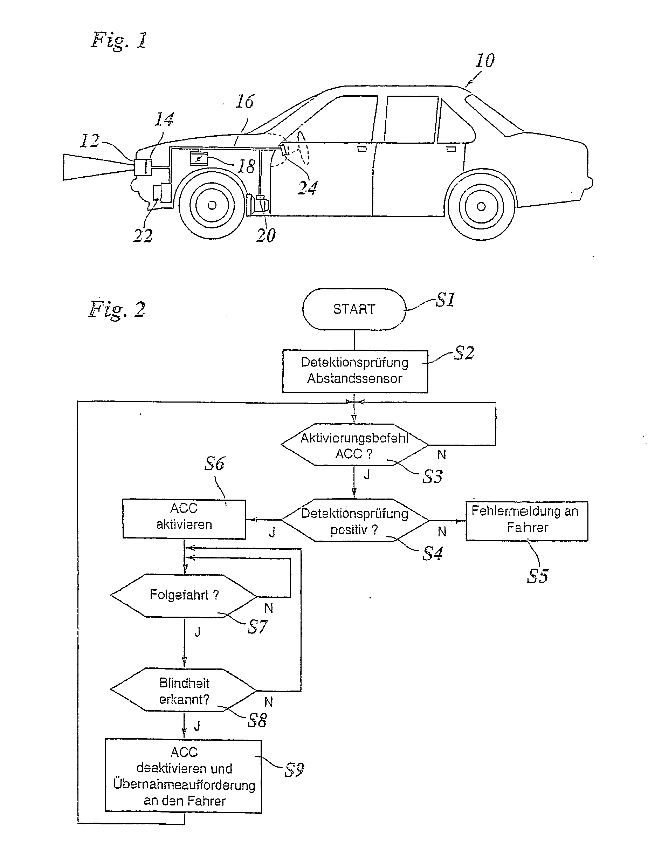

Das in Figur 1 gezeigte Kraftfahrzeug 10 weist als Abstandssensor 12 einen an der Frontpartie des Kraftfahrzeugs angebrachten Radarsensor auf, in dessen Gehäuse auch eine ACC-Steuereinheit 14 untergebracht ist. Die ACC-Steuereinheit 14 ist über einen Datenbus 16 (CAN) mit einer elektronischen Antriebs-Steuereinheit 18, einer Getriebe-Steuereinheit 20, einer Bremssystem-Steuereinheit 22 sowie mit der Steuereinheit 24 einer Mensch/Maschine-Schnittstelle (MMI) verbunden.

Der Abstandssensor 12 mißt mit Hilfe eines Mehrstrahlradars die Abstände, Relativgeschwindigkeiten und Azimutwinkel von vor dem Fahrzeug befindlichen Objekten, die Radarwellen reflektieren. Die in regelmäßigen Zeitabständen, z. B. alle 10 ms empfangenen Rohdaten werden in der ACC-Steuereinheit 14 ausgewertet, um einzelne Objekte zu identifizieren und zu verfolgen und um insbesondere ein unmittelbar auf der eigenen Fahrspur vorausfahrendes Fahrzeug zu erkennen und als Zielobjekt auszuwählen. Durch Befehle an die Antriebs-Steuereinheit 18 und die Bremssystem-Steuereinheit 22 sowie, bei Fahrzeugen mit Automatikgetriebe, an die Getriebe-Steuereinheit 20 regelt die ACC-Steuereinheit 14 die Geschwindigkeit des Fahrzeugs 10. Die Mensch/Maschine-Schnittstelle, die durch die Steuereinheit 24 gesteuert wird, umfaßt verschiedene Bedienungs- und Anzeigeelemente auf dem Armaturenbrett des Fahrzeugs und dient unter anderem dazu, Bedienbefehle des Fahrers an die ACC-Steuereinheit 14 zu übermitteln und Meldungen der ACC-Steuereinheit 14 an den Fahrer auszugeben. Zu diesem Zweck kann die MMI auch einen Lautsprecherausgang für akustische Signale oder synthetische Sprache aufweisen.

Wenn kein vorausfahrendes Fahrzeug geortet wird, regelt die ACC-Steuereinheit 14 die Geschwindigkeit des Fahrzeugs 10 auf eine vom Fahrer gewählte Wunschgeschwindigkeit. Ist dagegen ein vorausfahrendes Fahrzeug, dessen Geschwindigkeit kleiner ist als die des eigenen Fahrzeugs, als Zielobjekt erfaßt worden, so wird die Geschwindigkeit des Fahrzeugs 10 so geregelt, daß ein angemessener Abstand zu dem vorausfahrenden Fahrzeug eingehalten wird.

Der Aufbau und die Arbeitsweise eines solchen ACC-Systems werden beispielsweise beschrieben in Winner: "Adaptive Cruise Control " in Automotive Electronics Handbook, Ronald K. Jurgen (Hrsg.), 2. Auflage, Mac Graw-Hill (1999) Kapitel 30.1.

Wie im Stand der Technik bekannt ist, umfaßt die ACC-Steuereinheit 14 Selbsttest-Funktionen, die in einer Initialisierungsphase bei Fahrtantritt eine Funktionsprüfung des Abstandssensors und des Auswertesystems mit Hilfe geeigneter Testsignale ermöglichen. Ebenso umfaßt diese Steuereinheit Prüffunktionen, die während der Fahrt eine fortlaufende oder periodische Blindheitsprüfung des Abstandssensors 12 ermöglichen, beispielsweise durch Auswertung der empfangenen Radarsignale, wie in DE 199 45 268 A1 beschrieben wird.

Figur 2 ist ein Flußdiagramm eines Verfahrens, das gleichfalls in der Abstandssensor-Steuereinheit 14 implementiert ist und das bestimmt, wie bei aktiven ACC-System während der Fahrt die Blindheitserkennung durchgeführt wird und wie sich dies auf den Betriebszustand des ACC-Systems auswirkt.

Nach dem Systemstart in Schritt S1, unmittelbar nach dem Einschalten der Zündung des Fahrzeugs, wird zunächst in Schritt S2 eine Detektionsprüfung durchgeführt, bei der nach bekannten Verfahren die Funktionsfähigkeit des Abstandssensors 12 geprüft wird. Das positive oder negative Ergebnis dieser Detektionsprüfung wird gespeichert. Bei negativem Ergebnis der Detektionsprüfung kann wahlweise sofort über die Steuereinheit 24 und die Mensch/Maschine-Schnittstelle ein Fehlersignal ausgegeben werden. Dies ist jedoch nicht zwingend, da das Fahrzeug auch ohne funktionsfähiges ACC-System fahrtauglich ist.

In Schritt S3 wird dann periodisch geprüft, ob durch einen Fahrerbefehl das ACC-System aktiviert wurde. Wenn der Fahrer einen Aktivierungsbefehl eingegeben hat, wird in Schritt S4 das gespeicherte Ergebnis der in Schritt S2 durchgeführten Detektionsprüfung abgefragt. Wenn bei der Detektionsprüfung ein Fehler festgestellt wurde, erfolgt in Schritt S5 erneut die Ausgabe eines Fehlersignals, das den Fahrer darüber informiert, daß das ACC-System nicht benutzbar ist. Andernfalls erfolgt in Schritt S6 die Aktivierung des ACC-Systems.

Bei aktivem ACC-System werden die Signale des Abstandssensors 12 ausgewertet, und es wird entschieden, ob sich unmittelbar vor dem Fahrzeug 10 auf der von diesem Fahrzeug befahrenen Fahrspur ein anderes Fahrzeug befindet, das dann als Zielobjekt ausgewählt wird. Wenn ein solches Zielobjekt vorhanden ist, befindet sich das System im Modus "Folgefahrt", und es erfolgt eine Abstandsregelung auf das vorausfahrende Fahrzeug. Wird kein relevantes Zielobjekt festgestellt, so befindet sich das System im Modus "Freifahrt", und die Geschwindigkeit des Fahrzeugs wird auf die vom Fahrer gewählte Wunschgeschwindigkeit geregelt.

In Schritt S7 wird überprüft, ob der Modus "Folgefahrt" vorliegt. Wenn dies nicht der Fall ist, bleibt das System im Freifahrtmodus, und der Schritt S7 wird zyklisch wiederholt.

Nur wenn sich das System im Folgefahrtmodus befindet, wird in Schritt S8 eine Blindheitsprüfung des Abstandssensors 12 durchgeführt, beispielsweise anhand des Ausbleibens oder der Signalqualität des Radarechos vom ausgewählten Zielobjekt und unter Berücksichtigung etwaiger Radarechos von anderen Radarzielen. Wenn die Blindheitsprüfung ergibt, daß der Abstandssensor nicht erblindet ist, erfolgt ein Rücksprung zu Schritt S7, und die Schritte S7 und S8 werden zyklisch wiederholt, solange das System im Folgefahrt-Modus bleibt. Je nach Verkehrssituation kann ein ein- oder mehrmaliger Wechsel zwischen dem Folgefahrtmodus und dem Freifahrtmodus stattfinden. Die Blindheitsprüfung erfolgt jeweils nur im Folgefahrtmodus.

Wenn in Schritt S8 die Blindheit des Abstandssensors 12 erkannt wurde, wird in Schritt S9 das ACC-System deaktiviert, und der Fahrer erhält über die Steuereinheit 24 und die MMI eine Übernahmeaufforderung, die ihn darauf hinweist, daß er selbst die Kontrolle übernehmen muß, da das ACC-System wegen vermutlicher Blindheit des Abstandssensors abgeschaltet wurde. Danach erfolgt ein Rücksprung zu Schritt S3. Wenn der Fahrer das Gefühl hat, daß die Blindheit des Abstandssensors - etwa wegen geänderter Witterungsbedingungen - behoben ist, kann er somit das ACC-System jederzeit wieder aktivieren.

Da der Schritt S8 nur im Folgefahrtmodus durchlaufen wird, bleibt im Freifahrtmodus die Geschwindigkeitsregelung in jedem Fall aktiv, so daß der Fahrer nicht unnötig durch die Übernahmeaufforderung belästigt wird.

Wenn nach erfolgter Systemabschaltung in Schritt S9 der Fahrer in Schritt S3 erneut das ACC-System aktiviert, wird im allgemeinen die Geschwindigkeitsregelfunktion wieder benutzbar sein, selbst wenn die Blindheit des Abstandssensors 12 noch fortdauert. Da bei Blindheit des Sensors kein relevantes Zielobjekt erkannt und ausgewählt werden kann, wird die Abfrage des Folgefahrtmodus in Schritt S7 ein negatives Ergebnis haben, so daß keine erneute Blindheitsprüfung stattfindet. Natürlich muß der Fahrer in diesem Fall selbst auf vorausfahrende Fahrzeuge achten.

Die beschriebene Lösung hat den Vorteil, daß bei einer Freifahrt in reflexionsarmer Umgebung, in der sonst eine Blindheit des Abstandssensors vorgetäuscht würde, keine fälschliche Blindheitserkennung und somit keine unnötige Abschaltung des ACC-Systems stattfindet. Dies ist besonders für Fahrzeugnutzer von Vorteil, die häufig Überlandfahrten auf verkehrsarmen Straßen durchführen, an denen kaum reflektierende Radarziele vorhanden sind.

Zwar kann es in Ausnahmefällen vorkommen, daß in solchen Situationen eine echte Erblindung des Radarsensors eintritt und dann das ACC-System nicht auf das Auffahren auf ein vorausfahrendes langsameres Fahrzeug reagiert, doch führt dies in der Praxis nicht zu einer Beeinträchtigung der Verkehrssicherheit, da die letzte Verantwortung für die Fahrzeugführung ohnehin stets beim Fahrer liegt und der Fahrer, schon allein um die Spur zu halten, ohnehin gezwungen ist, die Fahrbahn vor seinem Fahrzeug im Auge zu behalten, so daß ihm vorausfahrende Hindernisse nicht entgehen werden.

Bei bekannten ACC-Systemen ist ohnehin auf dem Armaturenbrett des Fahrzeugs ein Display vorgesehen, das den Fahrer, beispielsweise durch Aufleuchten oder Farbänderung einer symbolischen Darstellung eines vorausfahrenden Fahrzeugs, darüber informiert, daß ein relevantes Zielobjekt ausgewählt ist (Folgefahrt). Außerdem informiert dieses Display den Fahrer auch über die gewählte Länge der Zeitlücke, die den Abstand zu dem ausgewählten Zielobjekt bestimmt. Wenn also der Fahrer vor sich ein vorausfahrendes Fahrzeug auftauchen sieht und über das Display keine Meldung erhält, daß ein relevantes Zielobjekt ausgewählt wurde, so kann er schon anhand dieses Umstands erkennen, daß eine Erblindung des Abstandssensors vorliegt, lange bevor der Abstand zum vorausfahrenden Fahrzeug auf kritische Werte abgenommen hat. Auf diese Weise ist das Verhalten des Systems für den Fahrer jederzeit transparent.

Die Komfortbeeinträchtigung, die sich daraus ergibt, daß in diesen seltenen Fällen ein Hindernis nicht automatisch erkannt wird, ist für den Fahrer - insbesondere in dünn besiedelten Gegenden mit trockenem Klima - eher zu akzeptieren als häufige Systemabschaltungen wegen vermeintlicher Erblindung des Sensors.

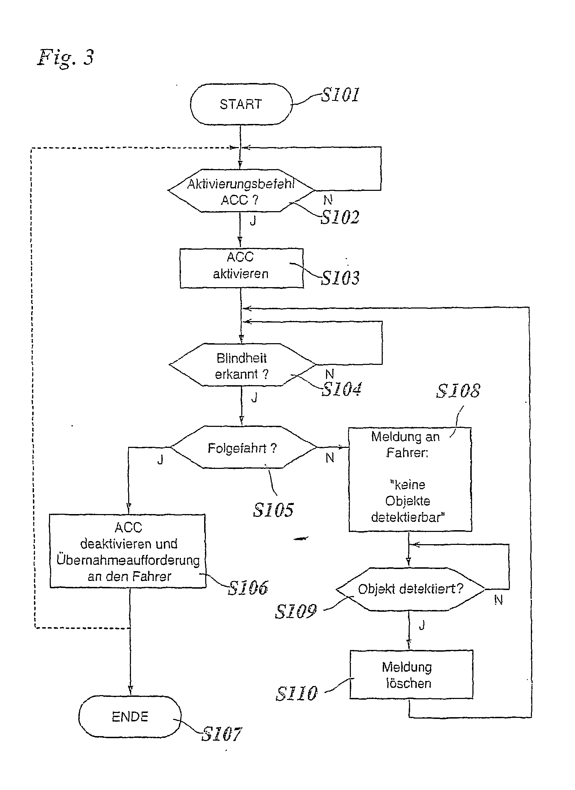

Figur 3 zeigt ein abgewandeltes Ausführungsbeispiel. Nach dem Systemstart (Schritt S101) wird in Schritt S102 periodisch das Vorliegen eines Aktivierungsbefehls des Fahrers überprüft. Im Anschluß an einen Aktivierungsbefehl wird in Schritt S 103 das ACC-System aktiviert. Danach erfolgt während des laufenden Regelbetriebs, sowohl in Folgefahrt als auch in Freifahrt, eine periodische Blindheitsprüfung (Schritt S104).

Erst wenn eine (vermeintliche) Blindheit des Abstandssensors erkannt wurde, wird in Schritt S105 unterschieden, ob sich das System im Folgefahrtmodus oder im Freifahrtmodus befindet. Im Folgefahrtmodus erfolgt einer Verzweigung zu Schritt S 106, wo das ACC-System deaktiviert wird und eine Übernahmeaufforderung an den Fahrer ergeht. Als Beispiel illustriert Figur 3 eine Variante, bei der im Anschluß an diese Übernahmeaufforderung das Programm beendet wird (Schritt S 107), so daß der Fahrer vor dem nächsten Systemstart keine Möglichkeit hat, das ACC-System zu reaktivieren. Wahlweise kann jedoch auch hier nach Schritt S106 ein Rücksprung zu Schritt S 102 erfolgen, so daß eine erneute Aktivierung des ACC-Systems ermöglicht wird.

Wenn in Schritt S 105 der Freifahrtmodus festgestellt wurde, kann unmittelbar ein Rücksprung zu Schritt S104 erfolgen. Im Ergebnis würde dies bedeuten, daß die Blindheitserkennung im Freifahrtmodus ignoriert wird. Im gezeigten Beispiel sind in diesem Zweig jedoch einig Zwischenschritte eingefügt. In Schritt S 108 erhält der Fahrer über das Display auf dem Armaturenbrett die Meldung "keine Objekte detektierbar". Es erfolgt jedoch keine Deaktivierung des Systems, so daß die Geschwindigkeitsregelfunktion (Regelung auf die Wunschgeschwindigkeit) weiterhin verfügbar bleibt. Die Meldung hat lediglich den Zweck, den Fahrer vorbeugend darauf hinzuweisen, daß der Abstandssensor möglicherweise erblindet ist, so daß keine vorausfahrenden Fahrzeuge detektiert werden können.

In Schritt S 109 wird dann durch die ACC-Steuereinheit 14 periodisch geprüft, ob der Abstandssensor wieder ein Objekt detektiert hat. Wenn dies der Fall ist, so bedeutet dies, daß in Wahrheit keine Blindheit des Sensors vorgelegen hat, sondern die vermeintliche Blindheitserkennung nur auf einen Mangel an reflektierenden Objekten zurückzuführen ist. In diesem Fall wird in Schritt S110 die Meldung (Schritt S108) wieder gelöscht, und es erfolgt ein Rücksprung zu Schritt S104, so daß die Regelung normal fortgesetzt wird.

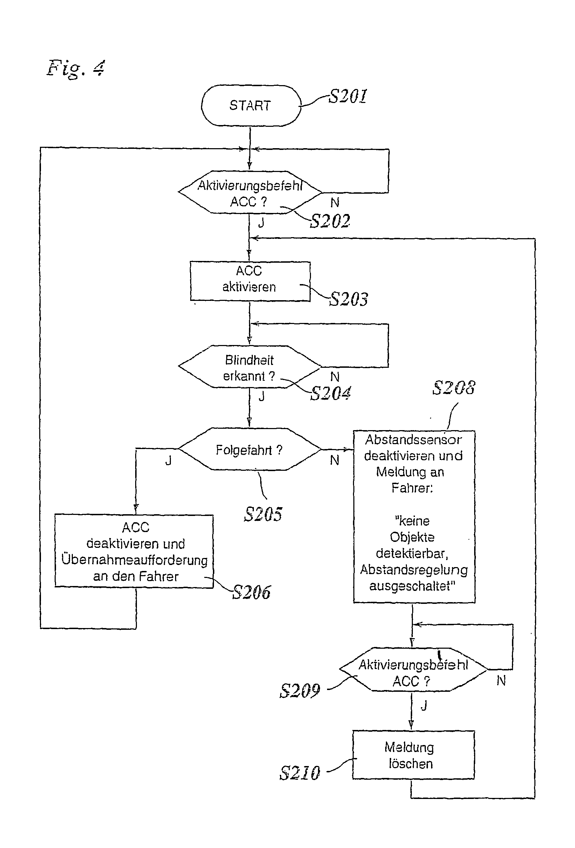

Figur 4 zeigt eine Abwandlung des Verfahrens gemäß Figur 3. Die Schritte S202 bis S206 entsprechen den Schritten S101 bis S106 in Figur 3. Nach der Blindheitserkennung in Schritt S204 und der Erkennung des Zustands "Freifahrt" in Schritt S205 erhält der Fahrer hier in Schritt S208 die Meldung "keine Objekte detektierbar, Abstandsregelung ausgeschaltet". Dies weist den Fahrer darauf hin, daß nur die Regelung auf die Wunschgeschwindigkeit aktiv bleibt, aber die Abstandsregelung für die Folgefahrt auch bei erneuter Erkennung von Objekten nicht automatisch wieder aufgenommen wird. Statt dessen wird in Schritt S209 erneut überprüft, ob der Fahrer einen Befehl zur (vollständigen) Reaktivierung des ACC-Systems eingegeben hat. Erst im Anschluß an einen solchen Fahrerbefehl wird in Schritt S210 die Meldung (Schritt S208) wieder gelöscht und es erfolgt ein Rücksprung zu Schritt S203, wo der Aktivierungsbefehl ausgeführt wird. Wenn inzwischen wieder Radarziele detektiert werden, bleibt das System im aktiven Modus. Andernfalls wird erneut der Schritt S205 durchlaufen und es erfolgt entweder ein Wechsel in den inaktiven Modus (Schritt S206) oder ein Wechsel in den teilaktiven Modus (Schritt S208), in dem zwar die Geschwindigkeitsregelung aktiv bleibt, aber die Abstandsregelung deaktiviert ist. Auch im inaktiven Modus kann der Fahrer über einen Aktivierungsbefehl (überprüft in Schritt S202) das ACC-System wieder aktivieren.

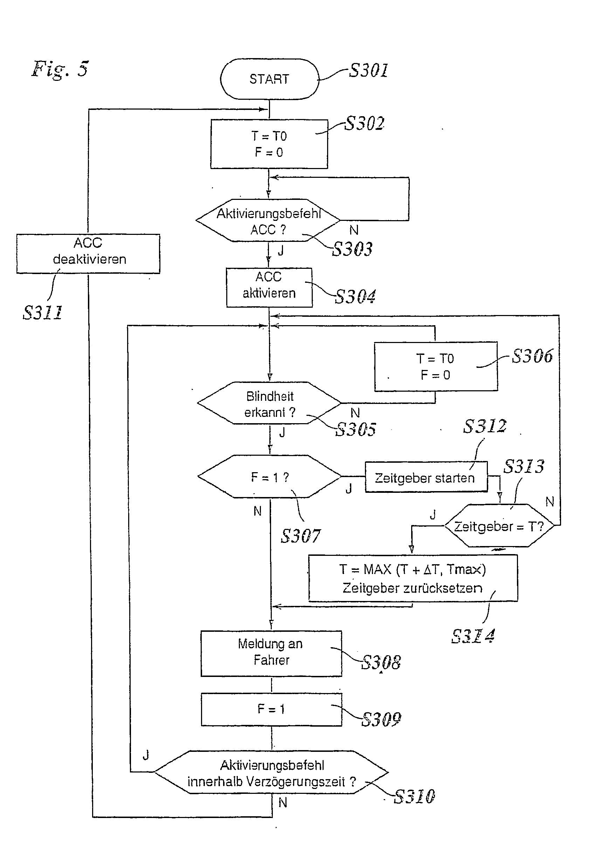

Figur 5 zeigt eine Ausführungsform, bei der für die Wahl zwischen dem aktiven und dem inaktiven Modus des ACC-Systems nicht zwischen Freifahrt und Folgefahrt unterschieden, sondern vielmehr auf das Verhalten des Fahrers abgestellt wird.

Nach dem Systemstart in Schritt S301 findet in Schritt S302 eine Initialisierung statt, bei der eine Wartezeit T auf den Wert T0 eingestellt und ein Flag F auf den Wert 0 gesetzt wird. In Schritt S303 wird der Aktivierungsbefehl überprüft, und in Schritt S304 wird gegebenenfalls das ACC-System aktiviert.

Bei laufendem Regelbetrieb erfolgt in Schritt S305 die Blindheitsprüfung, und wenn keine Blindheit des Sensors festgestellt wurde, werden in Schritt S306 die Wartezeit T und das Flag F (für den Fall, daß sie sich inzwischen geändert haben sollten) wieder auf die Anfangswerte T0 bzw. 0 zurückgesetzt, bevor die Blindheitsprüfung in Schritt S305 wiederholt wird.

Wenn in Schritt S305 die Blindheit des Abstandssensors 12 erkannt wurde, so wird in Schritt S307 überprüft, ob das Flag F den Wert 1 hat. Da dieses Flag auf 0 initialisiert wurde, wird das Ergebnis dieser Abfrage im ersten Zyklus negativ sein. Dann wird in Schritt S308 eine Meldung an den Fahrer ausgegeben, die den Fahrer darauf hinweist, daß das ACC-System wegen vermutlicher Blindheit des Abstandssensors deaktiviert werden wird. Im Anschluß daran wird in Schritt S309 das Flag F auf den Wert 1 gesetzt. Danach wird in Schritt S310 eine bestimmte Verzögerungszeit abgewartet und überprüft, ob der Fahrer innerhalb dieser Verzögerungszeit erneut den Aktivierungsbefehl eingegeben hat. Wenn dies nicht der Fall ist, wird das ACC-System in Schritt S311 deaktiviert, und es erfolgt ein Rücksprung zu Schritt S302, so daß der Fahrer das System nach erneuter Initialisierung wieder aktivieren kann (in Schritt S303).

Wenn der Fahrer dagegen in Schritt S310 innerhalb der Verzögerungszeit den Aktivierungsbefehl eingibt, so gibt er damit zu erkennen, daß er die Blindheitserkennung für unecht hält und den aktiven Zustand des ACC-Systems aufrecht erhalten möchte. Daraufhin erfolgt ein Rücksprung zu Schritt S305, und die Blindheitsprüfung wird wiederholt.

Wenn sich inzwischen an den Umgebungsbedingungen nichts geändert hat, wird erneut die Blindheit des Sensors erkannt werden. Die Überprüfung in Schritt S307 hat nun jedoch ein positives Resultat, da das Flag F in Schritt S309 auf 1 gesetzt worden ist. Daraufhin wird in Schritt S312 ein Zeitgeber gestartet (sofern er nicht bereits läuft). In Schritt S113 wird überprüft, ob seit Start des Zeitgebers die Wartezeit T abgelaufen ist, die aufgrund der Initialisierung zunächst den Wert T0 hat. In einer Warteschleife der Länge T werden die Schritte S304 und S307 wiederholt. Falls wieder ein Objekt detektiert wird, so wird die Warteschleife über Schritt 306 verlassen. Andernfalls wird nach Ablauf der Wartezeit in Schritt S314 die Wartezeit T um ein bestimmtes Inkrement ΔT erhöht, allerdings nur bis zu einem Maximalwert Tmax. Der Zeitgeber wird zurückgesetzt. Danach werden erneut die Schritte S308, S309 und S310 durchlaufen. Der Schritt S309 bleibt allerdings wirkungslos, da das Flag F bereits den Wert 1 hatte.

Die erneute Blindheitserkennung in Schritt S 305 führt somit in diesem Zyklus nicht zur sofortigen Ausgabe der Meldung in Schritt S308, sondern vielmehr wird diese Meldung erst nach Ablauf der Wartezeit T ausgegeben. Somit bleibt das System für die Dauer der Wartezeit T noch im aktiven Zustand und erst danach wird, sofern die Erblindung des Sensors anhält, der Fahrer in den Schritten S308 bis S310 erneut vor die Wahl gestellt, ob er die Abschaltung des Systems wegen vermutlicher Blindheit zulassen oder das System weiterhin aktiv halten will. Entscheidet sich der Fahrer für die letztere Alternative, erfolgt erneut ein Rücksprung zu Schritt S305, und die Warteschleife in Schritt wird nochmals durchlaufen, nun aber mit der längeren Wartezeit T + ΔT.

Dieser Zyklus kann mehrfach durchlaufen werden, wobei die Wartezeit T, während der das System aktiv bleibt, jedesmal um das Inkrement ΔT größer wird, bis der Maximalwert Tmax erreicht ist. Auf diese Weise kann der Fahrer mit relativ seltenen Eingriffen (erneute Eingabe des Aktivierungsbefehls in Schritt S310) das System im aktiven Zustand halten.

Wenn zu irgendeinem Zeitpunkt in Schritt S305 festgestellt wird, daß keine Blindheit des Abstandssensors mehr vorliegt, so wird durch das Zurücksetzen der Wartezeit T und des Flags F in Schritt S306 die "Erinnerung" an das vorherige Geschehen gelöscht, und das System verhält sich wieder so wie im Anfangszustand. Eine erneute Blindheitserkennung hätte dann als wieder eine sofortige Ausgabe der Meldung in Schritt S308 zur Folge. Wahlweise kann der Schritt S306 jedoch auch fortgelassen werden, so daß die Wartezeiten bis zum Ende der Fahrt weiter zunehmen bzw. auf dem Maximalwert bleiben. In diesem Fall wird der Fahrer seltener durch die Meldungen in Schritt S308 belästigt, falls sporadisch Radarziele detektiert werden.

Die in Figur 5 gezeigte Ausführungsform erfordert zwar einen gelegentlichen Eingriff des Fahrers in Form einer Eingabe des Aktivierungsbefehls in Schritt S310, doch braucht dieser Befehl aufgrund der "Lernfähigkeit" des Systems nur in relativ großen Zeitabständen eingegeben zu werden, wobei diese Zeitabstände im gezeigten Beispiel immer länger werden. Der Vorteil dieser Lösung besteht darin, daß die Blindheitserkennung auch bei längerer Freifahrt in reflexionsarmer Umgebung nicht völlig ignoriert wird. Die in Schritt S310 eingebaute Verzögerungszeit hat den Vorteil, daß der Fahrer auch bei der ersten Blindheitserkennung nicht durch ein sofortiges Aussetzen der Geschwindigkeitsregelung und die damit einhergehende unplausible Verzögerung des Fahrzeugs irritiert wird, sondern dieser Fahrzeugverzögerung vorbeugen kann, indem er rechtzeitig den Reaktivierungsbefehl eingibt.

Während im gezeigten Beispiel die Wartezeit T linear entsprechend dem konstanten Inkrement ΔT ansteigt, sind auch Ausführungsformen denkbar, bei denen die Wartezeit progressiv oder gemäß irgendeiner anderen Kurve zunimmt. Wahlweise kann die Länge der Wartezeit auch davon abhängig gemacht werden, wie häufig in der Vergangenheit Radarziele detektiert wurden. Eine geringe Detektionshäufigkeit spricht für eine reflexionsarme Umgebung, so daß sie Wartezeit verlängert werden sollte.

Die Ausführungsform nach Figur 5 kann auch dergestalt mit den zuvor beschriebenen Ausführungsformen kombiniert werden, daß in Folgefahrt eine sofortige Deaktivierung des ACC-Systems stattfindet, während in Freifahrt die Prozedur gemäß den Schritten S307 bis S314 durchlaufen wird.

Selbstverständlich kann auch bei den Ausführungsbeispielen nach Figuren 3 bis 5 im Anschluß an den Systemstart eine Detektionsprüfung entsprechend Schritt S2 in Figur 2 stattfinden. Ebenso versteht es sich, daß der Fahrer jederzeit die Möglichkeit hat, das ACC-System durch einen Abschaltbefehl zu deaktivieren. Dies ist jedoch in den Flußdiagrammen aus Gründen der Übersichtlichkeit nicht dargestellt worden. Azimut Reflexion

## Patentansprüche

1. Verfahren zur Wahl des Betriebszustands bei einem adaptiven Geschwindigkeitsregelsystem für Kraftfahrzeuge (10) mit einem Abstandssensor (12), der eine automatische Blindheitserkennung aufweist, **dadurch gekennzeichnet, daß** die automatische Abschaltung des adaptiven Geschwindigkeitsregelsystems bei Blindheit des Abstandssensors (12), die in Folge des Fehlers von reflektierenden Radarzielen erkannt wird, nur dann vorgenommen wird, wenn unmittelbar vor Erkennung der Blindheit des Abstandssensors (12) ein Betriebszustand "Folgefahrt" vorlag, in dem ein vorausfahrendes Fahrzeug als Zielobjekt ausgewählt war und der Abstand zu diesem Zielobjekt geregelt wurde.

2. Verfahren nach Anspruch 1, **dadurch gekennzeichnet, daß** bei erkannter Blindheit des Abstandssensors (12), wenn keine weitere Bedingung erfüllt ist und demgemäß die Geschwindigkeitsregelung fortgesetzt wird, eine Meldung an den Fahrer ausgegeben wird, die ihn auf die mögliche Blindheit des Abstandssensors hinweist.

3. Verfahren nach Anspruch 2, **dadurch gekennzeichnet, daß** die Meldung in einer visuellen Anzeige besteht und automatisch gelöscht wird, wenn der Abstandssensor (12) neue Objekte detektiert und das Blindheitserkennungssystem daraufhin feststellt, daß keine Blindheit des Abstandssensors vorliegt.

4. Verfahren nach einem der Ansprüche 1 oder 2, **dadurch gekennzeichnet, daß** bei erkannter Blindheit des Abstandssensors (12), wenn keine der weiteren Bedingungen vorliegt, ein teilaktiver Betriebszustand gewählt wird, in dem zwar die Geschwindigkeitsregelung auf eine vom Fahrer gewählte Wunschgeschwindigkeit aktiv bleibt, aber eine Abstandsregelung anhand der Signale des Abstandssensors (12) nur durch einen Befehl (S209) des Fahrers wieder aktivierbar ist.

5. Verfahren nach einem der vorstehenden Ansprüche, **dadurch gekennzeichnet, daß** die weitere Bedingung oder eine dieser Bedingungen darin besteht, daß es sich bei der erfolgten Blindheitseskennung um die erste Blindheitserkennung innerhalb einer bestimmten Zeitspanne handelt.

6. Verfahren nach Anspruch 5, **dadurch gekennzeichnet, daß**, wenn es sich bei der aktuellen Blindheitserkennung nicht um die erste Blindheitserkennung handelt, die Geschwindigkeitsregelung erst dann abgeschaltet wird, wenn seit der aktuellen Blindheitserkennung eine bestimmte Wartezeit (T) abgelaufen ist, in der die Erblindung des Abstandssensors fortdauert.

7. Verfahren nach Anspruch 6, **dadurch gekennzeichnet, daß** die Wartezeit (T) in Abhängigkeit von der Häufigkeit von Reaktivierungsbefehlen des Fahrers und/oder der Häufigkeit der Detektion von Zielobjekten durch den Abstandssensor variabel ist.

8. Geschwindigkeitsregelsystem für Kraftfahrzeuge (10) mit einem Abstandssensor (12) und einer Steuereinheit (14) zur Regelung der Geschwindigkeit des Fahrzeugs in Abhängigkeit von dem mit dem Abstandssensor (12) gemessenen Abstand zu einem vorausfahrenden Fahrzeug oder, wenn kein vorausfahrendes Fahrzeug detektiert wird, auf eine vom Fahrer gewählte Wunschgeschwindigkeit, **dadurch gekennzeichnet, daß** in der Steuereinheit (14) ein Verfahren nach einem der vorstehenden Ansprüche implementiert ist.

## Claims

1. Method for selecting the operating state in an adaptive speed control system for motor vehicles (10) having a distance sensor (12) which has an automatic detection of blindness facility, **characterized in that** the automatic deactivation of the adaptive speed control system is carried out when the distance sensor (12) is blind, which is detected as a consequence of the absence of reflective radar targets, only if directly before the detection of the blindness of the distance sensor (12) a "following travel mode" operating state was present in which a vehicle travelling in front was selected as the target object and the distance from this target object was controlled.

2. Method according to Claim 1, **characterized in that** when it is detected that the distance sensor (12) is blind and no other condition is met and accordingly the speed control is continued, a message is output to the driver which alerts him to the possible blindness of the distance sensor.

3. Method according to Claim 2, **characterized in that** the message takes the form of a visual display and is deleted automatically when the distance sensor (12) detects new objects and the detection of blindness system subsequently determines that the distance sensor was not blind.

4. Method according to one of Claims 1 or 2, **characterized in that** when it is detected that the distance sensor (12) is blind and none of the other conditions are met, a partially active operating state is selected in which even though the speed control to a desired speed selected by the driver remains active, a distance control by means of the signals of the distance sensor (12) can be reactivated only by a command (S209) from the driver.

5. Method according to one of the preceding claims, **characterized in that** the other condition or one of these conditions comprises the detection of blindness which has occurred being the first detection of blindness within a specific time period.

6. Method according to Claim 5, **characterized in that** if the current detection of blindness is not the first detection of blindness, the speed control is not switched off until a specific waiting time (T), in which the blinding of the distance sensor continues, has passed since the current detection of blindness.

7. Method according to Claim 6, **characterized in that** the waiting time (T) is variable as a function of the frequency of reactivation commands by the driver and/or the frequency of detection of target objects by the distance sensor.

8. Speed control system for motor vehicles (10) having a distance sensor (12) and a control unit (14) for controlling the speed of the vehicle as a function of the distance from a vehicle travelling in front measured with the distance sensor (12), or no vehicle is detected travelling in front, to a desired speed which is selected by the driver, **characterized in that** a method according to one of the preceding claims is implemented in the control unit (14).

## Revendications

1. Procédé pour sélectionner l'état de fonctionnement d'un système adaptatif de régulation de vitesse pour véhicules automobiles (10) avec un capteur de distance (12) qui comporte une détection automatique d'aveuglement,
**caractérisé en ce que**
la coupure automatique du système adaptatif de régulation de vitesse en cas d'aveuglement du capteur de distance (12), détecté par suite de l'absence de cibles de radar réfléchissantes, n'a lieu que s'il existait, immédiatement avant la détection de l'aveuglement du capteur de distance (12), un état de fonctionnement "marche suivante", dans lequel un véhicule qui précède a été sélectionné comme objet cible et la distance par rapport à cet objet cible a été réglée.

2. Procédé selon la revendication 1,
**caractérisé en ce que**
si un aveuglement du capteur de distance (12) est détecté et aucune autre condition n'est remplie, donc si la régulation de vitesse se poursuit, un message est envoyé au conducteur pour lui signaler l'aveuglement possible du capteur de distance.

3. Procédé selon la revendication 2,
**caractérisé en ce que**
le message est constitué par un affichage visuel et s'efface automatiquement lorsque le capteur de distance (12) détecte de nouveaux objets et le système de détection d'aveuglement constate ensuite qu'il n'y a pas d'aveuglement du capteur de distance.

4. Procédé selon l'une des revendications 1 ou 2,
**caractérisé en ce que**
si un aveuglement du capteur de distance (12) est détecté et aucune des autres conditions n'est remplie, on sélectionne un état de fonctionnement partiellement actif dans lequel la régulation de vitesse reste activement à une vitesse voulue, sélectionnée par le conducteur, mais une régulation de la distance à l'aide des signaux du capteur de distance (12) ne peut être réactivée que par une instruction (S209) du conducteur.

5. Procédé selon l'une des revendications précédentes,
**caractérisé en ce que**
l'autre condition ou l'une de ces conditions consiste **en ce que** la détection d'aveuglement effectuée est la première détection d'aveuglement à l'intérieur d'un intervalle de temps déterminé.

6. Procédé selon la revendication 5,
**caractérisé en ce que**
si la détection d'aveuglement actuelle n'est pas la première détection d'aveuglement, la régulation de vitesse est coupée seulement lorsqu'un certain temps d'attente (T) pendant lequel l'aveuglement du capteur de distance se poursuit s'est écoulé depuis la détection d'aveuglement actuelle.

7. Procédé selon la revendication 6,
**caractérisé en ce que**
le temps d'attente (T) est variable en fonction de la fréquence des instructions de réactivation du conducteur et/ou de la fréquence de la détection d'objets cibles par le capteur de distance.

8. Système de régulation de vitesse pour véhicules automobiles (10) avec un capteur de distance (12) et une unité de commande (14) pour la régulation de la vitesse du véhicule en fonction de la distance mesurée par le capteur de distance (12) par rapport à un véhicule qui précède ou, si aucun véhicule qui précède n'est détecté, à une vitesse souhaitée sélectionnée par le conducteur,
**caractérisé en ce qu'**
un procédé selon l'une des revendications précédentes est mis en oeuvre dans l'unité de commande (14).
